(19) Europäisches Patentamt
European Patent Office
Office européen des brevets

(11) Veröffentlichungsnummer: **0 088 960**
**B1**

(12) **EUROPÄISCHE PATENTSCHRIFT**

(45) Veröffentlichungstag der Patentschrift: **30.07.86**

(51) Int. Cl.$^4$: **C 08 L 53/02**

(21) Anmeldenummer: **83102125.8**

(22) Anmeldetag: **04.03.83**

(54) **Thermoplastische Formmasse.**

(30) Priorität: **17.03.82 DE 3209624**

(43) Veröffentlichungstag der Anmeldung: **21.09.83 Patentblatt 83/38**

(45) Bekanntmachung des Hinweises auf die Patenterteilung: **30.07.86 Patentblatt 86/31**

(84) Benannte Vertragsstaaten: **BE DE FR GB NL SE**

(56) Entgegenhaltungen:
**EP-A- 0 048 388**
**US-A- 4 195 136**
**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Pohrt, Juergen**
**Renchener Strasse 7**
**D-6800 Mannheim 61 (DE)**
Erfinder: **Matern, Ruediger**
**Uferstrasse 5**
**D-6804 Ilvesheim (DE)**
Erfinder: **Jenne, Helmut, Dr.**
**Grosser Moench 6**
**D-6905 Schriesheim (DE)**
Erfinder: **Gausepohl, Hermann, Dr.**
**Neuweg 10**
**D-6704 Mutterstadt (DE)**
Erfinder: **Gerberding, Karl, Dr.**
**In der Dreispitz 9**
**D-6706 Wachenheim (DE)**

EP 0 088 960 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine thermoplastische Formmasse, die eine Mischung von mit Kautschuk modifizierten Polymerisaten von Vinylaromaten (schlagfestem Polystyrol) und einem verzweigten, Styrol und Butadien enthaltenden, Blockcopolymerisat darstellt.

Zum Stand der Technik nennen wir :

(1) DE-OS-25 10 070

(2) deutsche Patentanmeldung P 30 49 186 und

(3) deutsche Patentanmeldung P 30 35 637.

Aus (1) sind Mischungen aus linearen 3-Blockcopolymerisaten ABA, und schlagfestem Polystyrol bekannt. In (2) und insbesondere in (3) sind Formmassen aus radialen Blockcopolymerisaten und schlagfestem Polystyrol beschrieben.

Bei der Herstellung der bekannten Formmassen bestand die Aufgabe, die physikalischen Eigenschaften zu verbessern, z. B. die Schlagzähigkeit im Falle von (1), oder transparente Formmassen mit guten mechanischen Eigenschaften herzustellen [vgl. (3)].

In der US-A-4 195 136 sind Harzzusammensetzungen aus 75 bis 98 Gew.-% einer Blockcopolymermischung aus vinylaromatischen Kohlenwasserstoffen und konjugierten Diolefinen und 25 bis 2 Teilen eines schlagfesten Polystyroles beschrieben. Aufgabenstellung bei der bekannten Anmeldung war es, sowohl die Transparenz als auch die Schlagzähigkeit von Mischungen aus Blockcopolymerisaten und schlagfestem Polystyrol zu verbessern. Die Lösung der Aufgabe besteht darin, eine spezielle Blockcopolymerisatmischung, die durch anionische Polymerisation hergestellt worden ist, zu verwenden. Hinweise auf die Möglichkeit, durch Zumischen von schlagfestem Polystyrol zu Blockcopolymerisaten das Blocken zu verhindern, sind dieser Schrift nicht zu entnehmen.

Es ist bekannt daß Blockcopolymerisate (lineare und radiale) bei der Herstellung von Schlauchfolien beim Abziehen zum Blocken neigen ; dieses Verhalten ist auch von anderen Kunststoffen, wie PE oder PVC, bekannt. Um dieses Blocken zu verbessern, ist für die genannten Kunststoffe, z. B. PE oder PVC, bereits die Verwendung von Antiblockmitteln vorgeschlagen worden ; die Antiblockmittel werden den Kunststoffen in geringen Mengen zugesetzt.

Es sind dies z. B. organische Hilfsmitel, wie Gleitmittel (Amidwachse), Säureamide (z. B. der Stearin- und Erucasäure) oder anorganische Stoffe, die in feinteiliger Form angewendet werden (z. B. Kieselgel, Calciumcarbonate, Kieselsäuren, Aluminiumsilikate).

Die bekannten, antiblockend wirkenden Zusätze führen bei der Abmischung mit glasklaren Blockcopolymerisaten zu einer Verschlechterung der mechanischen Eigenschaften (Antiblockmittel aus organischer Basis) bzw. zu einem Verlust der Transparenz (z. B. anorganische Antiblockmittel).

Es bestand daher die Aufgabe, ein für verzweigte Styrol-Butadien-Blockcopolymerisate geeignetes Antiblockmittel vorzugschlagen, das weder die mechanischen noch die optischen Eigenschaften des Ausgangsmaterials verschlechtert.

Die Aufgabe wird gelöst durch die Formmasse gemäß Patentanspruch 1.

Nachstehend wird der Aufbau der Komponenten der Formmasse, der Aufbau der Formmasse und deren Herstellung beschrieben.

Komponente I

Die Komponente I der erfindungsgemäßen Formmassen, d. h. das schlagfeste Polystyrol mit dem bevorzugt angewendeten vernetzten Kautschuk auf Basis von Polybutadien wird in Mengen von 0,1 bis 1,0 Gew.%, bezogen auf I und II, angewendet. Bevorzugt werden 0,1 bis 0,5 Gew.%, insbesondere 0,15 bis 0,4 Gew.%, jeweils bezogen auf I und II, angewendet.

Die einzusetzende Menge an Komponente I richtet sich nach der mittleren Teilchengröße der Weichkomponente und dem Kautschukgehalt. Bei mittleren Teilchengrößen von z. B. 5 bis 10 µm werden bei Kautschukgehalten von 7 bis 9 Gew.%, z. B. nur 0,2 bis 0,4 Gew.% an Komponente I benötigt. Bei schlagfesten Produkten mit kleinerer mittlerer Teilchengröße wird ein höherer Anteil der Komponente I zur Verhinderung des Blockens benötigt. Der Fachmann kann anhand weniger orientierender Versuche bei gegebener mittlerer Teilchengröße und gegebenem Kautschukgehalt die erforderliche Menge ermitteln.

Die Herstellung von schlagfestem Polystyrol ist bekannt. Alle nach den derzeit bekannten Verfahren hergestellten schlagfesten Produkte sind zum Aufbau der erfindungsgemäßen Formmasse geeignet.

Die Palette reicht dabei von mittleren Teilchengrößen (Zahlenmittel) der Weichkomponente von 0,3 bis 15 µm, insbesondere werden Teilchengrößen von 1 bis 12 µm, vorzugsweise solche von 2,5 bis 9 µm angewendet.

Der Kautschukgehalt kann bei den vorgenannten Teilchengrößen von 2 bis 18 Gew.%, insbesondere 4,5 bis 9 Gew.%, bezogen auf die Komponente I, betragen.

Als vinylaromatische Monomere a1) für die Herstellung der Komponente I kommen insbesondere Styrol und p-Methylstyrol sowie α-Methylstyrol, 2,4-Dimethylstyrol sowie tert.-Butylstyrol in Betracht. Es können auch geringe Mengen Acrylnitril mitverwendet werden. Bevorzugt werden jedoch Styrol oder p-Methylstyrol alleine oder in Mischung verwendet.

Das Monomere a2) für den Aufbau der Komponente I der erfindungsgemäßen Formmasse ist überwiegend, d. h. mehr als 50 Gew.%, vorzugsweise mehr als 60 Gew.%, jeweils bezogen auf Komponente I, Butadien-1.3. Die Palette reicht dabei von den medium- bis zu den high-cis-Marken. Es können auch Mischungen aus Butadien und Isopren angewendet werden. Bevorzugt wird Butadien angewendet. Ebenso lassen sich Kautschuke natürlicher Herkunft oder die bekannten Kautschuke auf EPDM-Basis verwenden.

Die Komponente I der erfindungsgemäßen Formmasse kann durch kontinuierliche Polymerisation in Gegenwart des Kautschuks in zwei oder mehr Reaktionszonen hergestellt werden (Verfahren hierzu sind in der US-PS 3 243 481 bzw. in der US-PS 3 903 202 beschrieben). Besonders bevorzugt wird die Komponente I der erfindungsgemäßen Formmasse nach dem in der DE-AS 17 70 392 oder dem in der DE-OS 25 25 019 beschriebenen Verfahren hergestellt. Im übrigen können die zahlreichen schlagfesten Polystyrole mit vernetzten oder unvernetzten Weichkomponenten, die im Handel erhältlich sind, angewendet werden.

Komponente II

Die Komponente II der erfindungsgemäßen Formmasse stellt mindestens ein sternförmig verzweigtes Blockmischpolymerisat mit durchschnittlich mehr als 2 Verzweigungen dar, das im wesentlichen aufgebaut ist aus mindestens einem vinylaromatischen Monomeren (b1), bevorzugt Styrol, und mindestens einem 1,3-Dien (b2); Butadien ist gegenüber Isopren oder Mischungen aus beiden bevorzugt. Die Komponente II der Formmasse wird in Mengen von 99,9 bis 99,0 Gew.%, bezogen auf I und II, angewendet. Besonders vorteilhaft werden 99,9 bis 99,5 Gew.% und insbesondere 99,85 bis 99,6 Gew.%, jeweils bezogen auf I + II, verwendet. Die Komponente II der erfindungsgemäßen Formmasse enthält 55 bis 80 Gew.% der Monomeren b1), vorzugsweise 70 bis 80 Gew.%, jeweils bezogen auf Komponente II, sowie 20 bis 45, insbesondere jedoch 30 bis 20 Gew.% der Monomeren b2), jeweils bezogen auf Komponente II.

Dabei bauen die genannten Monomerensorten b1) und b2) mindestens je ein Polymersegment auf, das nur aus Monomeren b1) oder b2) besteht. Ferner kann gegebenenfalls mindestens ein Polymersegment vorhanden sein, das aus Monomeren der einen Sorte und einem Anteil von Monomeren der anderen Sorte aufgebaut ist.

Als vinylaromatische Monomere b1) zum Aufbau von Polymersegmenten kommen insbesondere Styrol, p-Methylstyrol, seitenkettenalkylierte Styrole, wie α-Methylstyrol und die kernsubstituierten Styrole, wie Vinyltoluol oder Ethylvinylbenzol in Frage. Besonders bevorzugt wird Styrol und p-Methylstyrol.

Für den Aufbau von weiteren Polymersegmenten kommen konjugierte Diene b2) mit 4 bis 8 C-Atomen in Betracht. Diese können allein oder in Mischungen untereinander verwendet werden. Bevorzugt werden Butadien oder Isopren, wobei ersteres wiederum bevorzugt wird. Dies gilt für die Segmente aller Polymerisate.

Das sternförmig verzweigte Blockmischpolymerisat II wird nach an sich bekannten Methoden durch anionische Polymerisation mit Hilfe von lithiumorganischen Verbindungen als Initiator hergestellt. Es kann im einfachsten Fall, d. h. wenn nur 2 Polymersegmente vorliegen, durch die allgemeine Formel

$$(A{-}B)_x{-}Y$$

oder

$$(B{-}A)_x{-}Y$$

oder Mischungen beider dargestellt werden (x ist im Mittel größer als 2 und beträgt maximal 4).

In der Formel soll A ein Polymersegment bedeuten, das im wesentlichen aus vinylaromatischen Monomeren aufgebaut ist. B bedeutet ein Polymersegment, das im wesentlichen 1,3-Diene als Monomerenbaustein enthält. Die allgemeine Formel soll lediglich zum Ausdruck bringen, daß sowohl die Butadienyl- als auch die Styrylenden an das Kopplungszentrum Y angebunden sein können. Bezüglich des Aufbaus der linearen Seitenäste des verzweigten Blockcopolymerisats bestehen verschiedene Möglichkeiten; es können lineare Zwei- oder Drei- oder Multiblockcopolymerisate oder Mischungen derselben vor der Herstellung des gekoppelten Endproduktes vorliegen. Bei der Kopplung entstehen die bekannten verzweigten Blockcopolymerisate, die in der Regel, da die Kopplung nicht quantitativ verläuft, eine komplizierte Mischung aus linearen und sternförmig verzweigten Copolymerisaten unterschiedlichen Sternastgehaltes darstellen.

Außerdem soll die vorstehende Formel auch die polymodalen Blockcopolymerisate umfassen. Somit können in der erfindungsgemäßen Formmasse polymodale verzweigte Blockcopolymerisate mit im wesentlichen der folgenden Struktur

$$(A^1{-}A^2{-}B)_n{-}X{-}(B{-}A_2)_m$$

$m = 1, 2, 3$
$m + n \geq 2$
$n = 0, 1, 2, 3...$

mit gutem Erfolg angewendet werden. Derartige Blockcopolymerisate können nach dem in der DE-OS 19 59 922 beschriebenen Verfahren ohne weiteres durch anionische Polymerisation erhalten werden.

Die nach dem in der DE-OS-25 50 227 beschriebenen Verfahren erhältlichen verzweigten, polymodalen Blockcopolymerisate können im wesentlichen durch die folgende Struktur beschrieben werden :

$$(A^1—A^2 \rightarrow B)_n—X—(A^3 \leftarrow B—A^2)_m$$

$m = 1, 2, 3...$
$m + n \geq 2$
$n = 0, 1, 2, 3$

und sind ebenfalls bevorzugt in der erfindungsgemäßen Formmasse als Komponente II zu verwenden, wie die polymodalen verzweigten Blockcopolymerisate der Struktur

$$(A^1—B \rightarrow A^2)_n—X—(A^2 \leftarrow B)_m$$

Die Herstellung derartiger Blockcopolymerisate ist in der DE-OS-25 50 226 beschrieben.

In allen vorstehend beschriebenen Blockcopolymerisaten bedeuten $A^1$, $A^2$ und $A^3$ nichtelastomere Polymersegmente auf Basis wenigstens eines monovinylaromatischen Monomeren. Die Molekulargewichte der Polymersegmente sollen jeweils die Werte aufweisen, die in den genannten Druckschriften als bevorzugt bzw. beispielhaft ausgewiesen sind.

In allen erfindungsgemäß eingesetzten Blockcopolymerisaten steht B für ein elastomeres Polymersegment auf Basis wenigstens eines konjugierten Diens. In den erfindungsgemäß anzuwendenden verzweigten polymodalen Blockcopolymerisaten bedeuten n und m Laufzahlen, wobei m gleich oder größer als n sein kann und die Summe von m + n 2 ist, bevorzugt ist die Summe von $m + n = 3 \cdot$ X steht für den Rest des polyfunktionellen Kupplungsmittels. Über diesen Rest des polyfunktionellen Kupplungsmittels sind die die Verzweigung bildenden Copolymerisatketten zu den sternförmig verzweigten Blockcopolymerisaten chemisch verknüpft. Als Kupplungsmittel kommen die in den genannten Druckschriften beschriebenen Verbindungen in Betracht. In den genannten Strukturformeln bedeuten A—B scharfe und A→B verschmierte Übergänge zwischen den einzelnen Polymersegmenten. B kann außerdem einen statistisch aufgebauten Butadien/Styrolblock darstellen, der aus überwiegend Bu-Einheiten aufgebaut ist.

Die in der erfindungsgemäßen Formmasse anzuwendenden Blockcopolymerisate der vorstehend beschriebenen Strukturen können jeweils einzeln, oder in Mischungen untereinander verwendet werden.

Geeignet sind ferner als Komponente II die in den US-PS-4 248 980 und 4 248 984 beschriebenen Blockcopolymerisate.

Komponente III

Die erfindungsgemäßen Formmassen können gegebenenfalls übliche Zusatzstoffe als Komponente III enthalten. Als Zusatzstoffe kommen bekannte Stabilisatoren, Fließmittel, Entformungsmittel, Füllstoffe, Farbpigmente, Antistatika und dgl. in Frage. Die erfindungsgemäßen Formmassen können gegebenen falls auch mit den üblichen Brom- und/oder Chlor enthaltenden organischen Verbindungen und unter Mitverwendung üblicher Synergisten in wirksamen Mengen flammfest ausgerüstet werden.

Die Herstellung der erfindungsgemäßen Formmasse sowie die Einarbeitung der eventuell verwendeten Zusatzstoffe kann nach geeigneten und bekannten Mischverfahren, z. B. in Extrudern, Knetern oder Walzen oder durch Mischen von Lösungen mit anschließendem Entfernen des Lösungsmittels erfolgen.

Die erfindungsgemäße Formmasse wird zur Herstellung von Folien durch Extrusion nach dem Ringdüsen- und Breitschlitzdüsenverfa oder durch Kalandrierverfahren verwendet. Bevorzugt werden nach dem Ringdüsen- und Breitschlitzdüsenverfahren hergestellte Folien.

Die nach dem bevorzugten Verfahren hergestellten Folien können für die verschiedensten Anwendungszwecke herangezogen werden, insbesondere dienen sie der Verpackung von Nahrungsmitteln für deren Lagerung bei tiefen Temperaturen. Falls die erfindungsgemäße Formmasse im Verschnitt mit Standardpolystyrol, PPO und/oder S/B-Blockcopolymeren oder anderen polymeren Zusätzen abgemischt werden, können Folien mit ausgezeichneter Transparenz, guter Reißfestigkeit und sehr hohem Oberflächenglanz erhalten werden.

Für die Durchführung der Beispiele wurden folgende Produkte verwendet :

Als Komponente I wurden die nach folgenden Druckschriften hergestellten Produkte eingesetzt :

Produkt A nach DE-AS-26 13 352 mit einem Kautschukgehalt von 8 % und einer mittleren Teilchengröße von unter 1 µm.

Produkt B nach DE-AS-17 70 392 mit einem Kautschukgehalt von 8 % und einer mittleren Teilchengröße von 3,5 μm.

Produkt C nach DE-AS-25 25 019 mit einem Kautschukgehalt von 8 % und einer mittleren Teilchengröße von 8 μm.

Als Komponente II wurden die nach folgenden Druckschriften hergestellten Produkte eingesetzt :

Produkt D nach DE-AS-19 59 922, Beispiel I

Produkt E nach der Lehre der DE-OS-25 50 226, wobei 10 % Standard-Polystyrol zugemischt waren.

Nachweis der Antiblockwirkung von schlagfestem Polystyrol als Zusatz zu SB-Blockcopolymeren

Hergestellt werden Granulatmischungen von SB-Blockcopolymeren und schlagfestem Polystyrol. Diese Granulatmischungen werden, durch einen Extruder mittels Ringdüse zu Schlauchfolien verarbeitet. Das Flachlegen der Schläuche durch eine Walze ergibt eine Doppelfolie, deren Seiten gegeneinander haften (« Blocken »). Die Haftung wird durch Messung der Zugkräfte quantifiziert, die zum Trennen der gegeneinanderliegenden Folienseiten erforderlich sind.

Die Schlauchfolien wurden mit einem Extruder 60/25 D mit genuteter Einzugsbuchse hergestellt. Die Massetemperatur vor Eintritt in das Werkzeug lag zwischen 205 und 210 °C.

Der Durchsatz betrug 96 kg/h bei einer Abziehgeschwingkeit von ca. 14 m/min. Mit dem Aufblasverhältnis von 1 : 1,75 ergab sich eine Schlauchfoliendicke von 100 μm bis 120 μm je nach Mischung.

Zugversuch

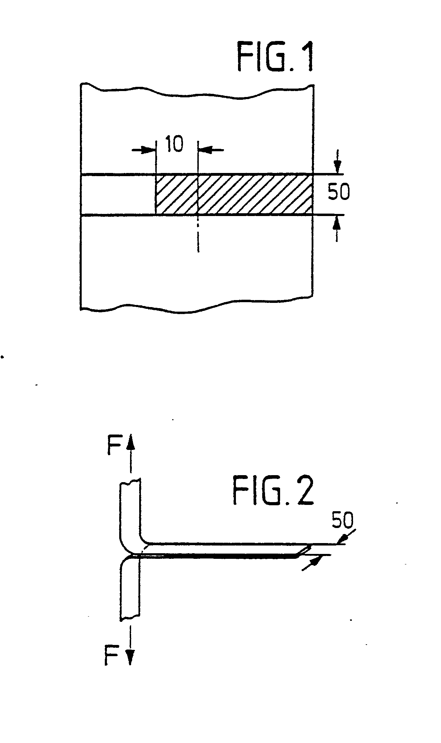

Aus den flachgelegten Schläuchen wurden quer zur Extrusionsrichtung gemäß Fig. 1 doppeltliegende Probestreifen von 50 mm Breite herausgeschnitten. Diese Doppelstreifen wurden an einem Ende auseinandergefaltet, so daß zwei Schenkel zum Einspannen in die Klemmen einer Zugprüfmaschine nach Fig. 2 gebildet wurden. Die Schenkellängen waren so bemessen, daß für den Teil des im Blockzustand belassenen Streifens eine Weglänge von 10 mm bis zur Mitte der Schlauchfolie vorgegeben var, um das dort zu erwartende Maximum der Blockwirkung zu erfassen, während die Seitenflächen der Schlauchfolie erfahrungsgemäß durch Kompression der Luft nach außen während des Durchgangs der Folie durch die Walze weniger stark blocken.

Der Zugversuch erfolgte mit einer Klemmenabzugsgeschwindigkeit von 100 mm/min. Die Zugkräfte wurden über der Weglänge des sich öffnenden Streifens grafisch aufgezeichnet.

Die mittleren Bandbreiten der Zugkräfte aller Versuchseinstellungen sind in Tab. 1 aufgeführt. Sie wurden aus 5 bis 10 Einzelmessungen gewonnen [Angabe in Newton].

Bezogen auf den Ausgangswert der Zugkraft von D und E (Vergleichsversuche 19 und 20) zeigen die Mischungen mit Standardpolystyrol (Vergleichsversuche 21, 22, 23) keine Antiblockwirkung. Gleiches gilt für die Mischungen von D und E mit A (einem schlagzähen Polystyrol mit sehr kleinen Kautschukteilchen) : Beispiele 1, 4, 9 und 13. Für B mit den im Mittel größeren Teilchen — im Vergleich zu A — ergibt sich eine Antiblockwirkung bei Zusätzen ab 0,2 Gew.% bei E (Beispiel 6). Produkt C mit den im Mittel größten Teichen im Vergleich zu B und A bewirkt der Zusatz von 0,2 Gew.% für alle Komponenten II (Produkte D und E) Antiblockwirkung : Beispiele 7 und 8.

Tabelle 1

| Beispiel | Komponente I | | Komponente II | | Zugkraft |
|---|---|---|---|---|---|
| | Produkt | Gew.% | Produkt | Gew.% | in [N] |
| 1 | A | 0,1 | E | 99,9 | 0,15 - 0,20 |
| 2 | B | 0,1 | E | 99,9 | 0,15 - 0,20 |
| 3 | C | 0,1 | E | 99,9 | 0,12 - 0,15 |
| 4 | A | 0,2 | D | 99,8 | 0,30 - 0,50 |
| 5 | B | 0,2 | D | 99,8 | 0,60 - 0,80 |
| 6 | B | 0,2 | E | 99,8 | Blockfrei |
| 7 | C | 0,2 | D | 99,8 | Blockfrei |
| 8 | C | 0,2 | E | 99,8 | Blockfrei |
| 9 | A | 0,5 | D | 99,5 | 0,20 - 0,30 |
| 10 | B | 0,5 | D | 99,5 | 0,15 - 0,25 |

(Fortsetzung)

| Beispiel | Komponente I Produkt | Komponente I Gew.% | Komponente II Produkt | Komponente II Gew.% | Zugkraft in [N] |
|---|---|---|---|---|---|
| 11 | C | 0,5 | D | 99,5 | Blockfrei |
| 12 | C | 0,5 | E | 99,5 | Blockfrei |
| 13 | A | 1,0 | E | 99,0 | 0,15 - 0,20 |
| 14 | B | 1,0 | D | 99,0 | Blockfrei |
| 15 | B | 1,0 | E | 99,0 | Blockfrei |
| 16 | C | 1,0 | D | 99,0 | Blockfrei |
| 17 | C | 1,0 | E | 99,0 | Blockfrei |
| 18 | B | 2,0 | E | 98,0 | Blockfrei |
| Vergleichs-versuche | Standard Polystyrol Gew.% | | | | |
| 19 | 0 | | D | 100 | 0,80 - 1,00 |
| 20 | 0 | | E | 100 | 0,15 - 0,20 |
| 21 | 10 | | D | 90 | 0,40 - 0,60 |
| 22 | 20 | | D | 80 | 1,40 - 1,60 |
| 23 | 30 | | E | 70 | 0,15 - 0,20 |

Bestimmung des Glanzes der Folien :

Der Glanz der Folien wurde mit Hilfe des Goniophotometers GP2 (Fa. Zeiss) bestimmt.

Dabei wird eine Probe (Größe ca 4 × 5 cm) ohne Spannvorrichtung waagrecht und eben auf eine schwarze Samtunterlage gelegt und mit quasi parallelem Licht (Glühlampenlicht) unter einem Winkel von 60 Grad (Öffnungswinkel 0,5 Grad) zur Probennormalen bestrahlt. Da in einem Winkelbereich von 50 bis 70 Grad (Öffnungswinkel 0,5 Grad) zur Probennormalen reflektierte Licht wird registriert.

Dabei werden die Größen Glanz G und Drittelbreite DB der Folien nach folgenden Formeln bestimmt.

1) G = 100 × G (Probe)/G (Schwarzglasstandard))

G (Probe) = Maximum der Goniophotometerkurve der Probe (= Reflexion am Glanzwinkel)

G (Schwarzglasstand) = Maximum der Goniophotometerkurve des Schwarzglasstandard

2) DB = DB (Probe)/DB (Schwarzglasstand.)

DB (Probe) = Breite der Goniophotometerkurve bei einem Drittel des Glanzmaximums (Drittelbreite) der Probe

DB (Schwarzglasstand) = Drittelbreite des Schwarzglasstandards

Der Glanz einer Probe wächst mit steigendem G und fallendem DB.

Die Meßergebnisse sind in Tabelle 2 wiedergegeben :

Tabelle 2

| LNr. | Komponenten I | | G [%] | DB |
|---|---|---|---|---|
| 6 | B | 0,2 % | 92,76 | 5,50 |
| 15 | B | 1 % | 83,33 | 6,44 |
| 18 | B | 2 % | 77,26 | 8,05 |

Tabelle 2 zeigt, daß mit zunehmender Menge an Komponente I der Glanz abnimmt.

**Patentansprüche**

1. Thermoplastiche Formmasse, enthaltend eine Mischung aus mindestens je einem Mischpolymerisat I und II, wobei

I mindestens ein schlagfestes (Pfropf)-Mischpolymerisat darstellt, das aufgebaut ist aus

a1) mindestens einem monovinylaromatischen Monomeren und

a2) wenigstens einem überwiegend 1,3-Diene enthaltenden, gegebenenfalls vernetzten, (Co)-Polymerisat und

II mindestens ein sternförmig verzweigtes (radiales) Blockmischpolymerisat bedeutet, das durchschnittlich mehr als 2 Verzweigungen aufweist und das aufgebaut ist aus

b1) 55 bis 80 Gew.%, bezogen auf II, mindestens einem monovinylaromatischen Monomeren, und

b2) 20 bis 45 Gew.%, bezogen auf II, mindestens einem 1,3-Dien als Monomerem, und

wobei die genannten Monomersorten b1) und b2) mindestens je ein Polymersegment in den Verzweigungen aufbauen, das nur aus Monomeren b1) oder b2) besteht und wobei ferner gegebenenfalls mindestens ein Polymersegment vorhanden ist, das aus Monomeren der einen Sorte und einem Anteil von Monomeren der anderen Sorte aufgebaut ist,

gegebenenfalls ferner enthaltend,

III übliche Hilfsmittel in wirksamen Mengen, dadurch gekennzeichnet, daß die Formmasse 0,1 bis 1 Gew.% des Pfropmischpolymerisates I, bezogen auf I + II, enthält.

2. Formmasse nach Anspruch 1, dadurch gekennzeichnet, daß sie zusätzlich einen Gehalt an Polystyrol aufweist.

3. Verwendung der Formmassen gemäß Anspruch 1 zur Herstellung von Folien.

4. Folien aus Formmassen gemäß Anspruch 1.

**Claims**

1. A thermoplastic molding material comprising a mixture of at least one copolymer I and at least one copolymer II,

copolymer I being a high-impact (graft) copolymer which is derived from

a1) at least one monovinyl-aromatic monomer, and

a2) at least one polymer or copolymer predominantly containing polymerized 1,3-diene units, which polymer or copolymer may or may not be crosslinked, and

copolymer II being a block copolymer with star-shaped branching, ie. a radial block copolymer, having an average of more than 2 branches per molecule and derived from

b1) 55-80 % by weight, based on II, of at least one monovinyl-aromatic monomer, and

b2) 20-45 % by weight, based on II, of at least one 1,3-diene monomer,

the said monomers b1) and b2) each constituting at least one polymer segment, consisting solely of the monomer b1) or b2), in the branches, and, if desired, at least one polymer segment, derived from one type of monomer and a proportion of the other type of monomer, being additionally present,

and optionally comprising

III effective amounts of conventional assistants, wherein the amount of graft copolymer I in the molding material is from 0.1 to 1 % by weight, based on the weight of I + II.

2. A molding material as claimed in claim 1, which additionally contains polystyrene.

3. The use of a molding material as claimed in claim 1 for the production of film and sheeting.

4. Film and sheeting produced from a molding material as claimed in claim 1.

**Revendications**

1. Masse de moulage thermoplastique, contenant un mélange d'au moins un de chacun des copolymères I et II,

I représentant au moins un copolymère (greffé) résistant au choc qui est constitué à partir

a1) d'au moins un monomère monovinylaromatique et

a2) d'au moins un (co)-polymère éventuellement réticulé, contenant en majorité des 1,3-diènes et

II représentant au moins un copolymère séquencé (radial) ramifié en étoile qui présente en moyenne plus de 2 ramifications et qui est constitué à partir

b1) de 55 à 80 % en poids, par rapport à II, d'au moins un monomère monovinylaromatique et

b2) de 20 à 45 % en poids, par rapport à II, d'au moins un 1,3-diène en tant que monomère,

lesdites sortes de monomères b1) et b2) constituant chacune, dans les ramifications, au moins un segment de polymère qui ne se compose que de monomère b1) ou b2) et, en outre, il est éventuellement présent au moins un segment de polymère qui est constitué à partir de monomères de l'une des sortes et d'une part de monomères de l'autre sorte,

et contenant en outre, le cas échéant,

III des produits auxiliaires usuels dans des quantités actives, caractérisée en ce qu'elle contient 0,1 à 1 % en poids du copolymère greffé I, par rapport à I + II.

2. Masse de moulage selon la revendication 1, caractérisée en ce qu'elle présente en plus une teneur en polystyrène.

3. Utilisation des masses de moulage selon la revendication 1 pour la fabrication de feuilles minces.

4. Feuilles minces fabriquées à partir de masses de moulage selon la revendication 1.

FIG. 1

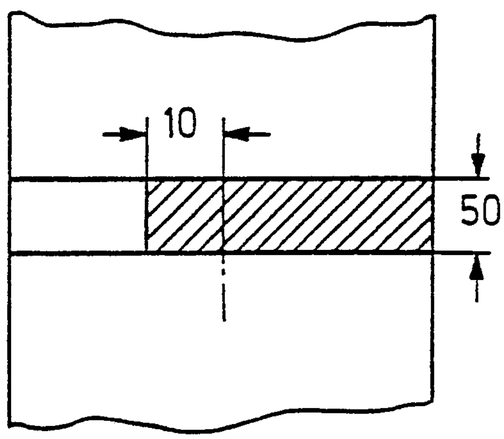


FIG. 2